**Europäisches Patentamt**

(19) **European Patent Office**

**Office européen des brevets**

(11) Numéro de publication : **0 304 599 B1**

(12) **FASCICULE DE BREVET EUROPEEN**

(45) Date de publication du fascicule du brevet :
09.10.91 Bulletin 91/41

(51) Int. Cl.⁵ : **F16F 9/46**

(21) Numéro de dépôt : **88111197.5**

(22) Date de dépôt : **13.07.88**

(54) **Amortisseur hydraulique muni de moyens permettant de faire varier les caractéristiques de fonctionnement.**

(30) Priorité : **21.07.87 FR 8710311**

(43) Date de publication de la demande :
**01.03.89 Bulletin 89/09**

(45) Mention de la délivrance du brevet :
**09.10.91 Bulletin 91/41**

(84) Etats contractants désignés :
**DE ES FR GB IT**

(56) Documents cités :
**EP-A- 0 003 290**
**EP-A- 0 185 389**
**EP-A- 0 207 409**
**DE-A- 3 545 053**
**FR-A- 2 287 627**

(56) Documents cités :
**GB-A- 2 014 693**
**PATENT ABSTRACTS OF JAPAN, vol. 7, no. 165 (M-230) [1310], 20 juillet 1983, page 141 M 230; & JP-A-58 72 744 (KAYABA KOGYO K.K.) 30.04.1983**

(73) Titulaire : **Sirven, Jacques**
**34, rue de l'Orangerie**
**F-78000 Versailles (FR)**

(72) Inventeur : **Sirven, Jacques**
**34, rue de l'Orangerie**
**F-78000 Versailles (FR)**

(74) Mandataire : **Casalonga, Axel et al**
**BUREAU D.A. CASALONGA - JOSSE**
**Morassistrasse 8**
**W-8000 München 5 (DE)**

Jouve, 18, rue Saint-Denis, 75001 PARIS

EP 0 304 599 B1

## Description

La présente invention a pour objet un amortisseur hydraulique destiné à être monté entre le châssis ou la caisse d'un véhicule automobile et une partie non suspendue par exemple une roue du véhicule.

L'invention est relative en particulier à des amortisseurs comportant une valve de commande montée de façon à être pilotée pour provoquer une diminution de la force d'amortissement à partir d'une certain vitesse de compression de la tige de l'amortisseur. On connaît des amortisseurs de ce type déjà décrits par exemple dans la demande de brevet français FR-A-2287627 (SIRVEN) qui comportent dans ce but une valve de commande pilotée par la pression du fluide hydraulique de façon à mettre en communication, lorsqu'elle s'ouvre, les deux chambres délimitées dans le cylindre de l'amortisseur par le piston principal actionné par la tige de l'amortisseur. La pression de pilotage de la valve de commande est obtenue en freinant l'écoulement vers un réservoir de l'excédent de fluide dû à la diminution de volume utile du cylindre par la suite de la pénétration de la tige du piston dans l'une des chambres du cylindre. Lorsque la vitesse de la tige du piston, lors d'un mouvement de compression rapide, dépasse une valeur limite, la pression différentielle agissant sur les deux faces de la valve de commande s'accroît et provoque, au-delà d'une valeur limite prédéterminée, l'ouverture de la valve de commande, ce qui entraîne une diminution rapide de la force d'amortissement. On obtient donc une force d'amortissement qui décroît en fonction de la vitesse de déplacement du piston de l'amortisseur, en compression.

La valve de commande peut également être soumise à l'action d'une pression de référence sensiblement constante, une des faces de la valve de commande pouvant alors constituer une portion de surface délimitant une chambre de référence remplie d'un fluide de référence par exemple un gaz à une pression déterminée. Cette chambre de référence peut être fermée et isolée ou à l'atmosphère ou encore reliée à la partie du réservoir de fluide remplie de gaz de façon à réaliser un équilibre de pression.

On a également décrit dans la demande de brevet européen EP-A-0003290 (SIRVEN) un amortisseur de ce type dans lequel la valve de commande, au lieu d'être montée fixe dans le cylindre, est solidaire du piston. Le réservoir de fluide hydraulique est avantageusement disposé à la partie supérieure d'un tube définissant le cylindre, à l'opposé de la tige de piston.

Dans ces deux amortisseurs de type connu, il a été également prévu et disposé à l'intérieur de l'amortisseur, un bloc élastique, par exemple en élastomère, capable de faire varier le volume utile de l'amortisseur lors d'un mouvement de compression rapide de la tige modifiant ainsi les caractéristiques de fonctionnement lors d'une compression brusque en agissant sur l'ouverture de la valve de commande par augmentation de pression à l'intérieur de l'amortisseur.

Dans ces amortisseurs connus, l'écoulement de fluide hydraulique du réservoir vers le cylindre, lors d'un mouvement de détente, se fait de manière pratiquement libre par l'intermédiaire d'un passage reliant le réservoir au cylindre de l'amortisseur, ce passage étant muni d'un clapet anti-retour n'autorisant l'écoulement que du réservoir vers le cylindre.

On connaît déjà des dispositifs permettant de faire varier les caractéristiques de fonctionnement d'amortisseurs de véhicule de type classique qu'ils soient de structure bitube ou monotube. Ces dispositifs de variation utilisent généralement des électrovalves ouvrant ou fermant des passages d'huile ou des moteurs électriques capables de déplacer des plongeurs dans des restrictions traversées par l'huile se trouvant dans l'amortisseur. Ces passages ou ces restrictions sont ceux qui créent la chute de pression à l'origine de la force d'amortissement. Lors d'un mouvement de compression, on obtient ainsi une augmentation de la force d'amortissement lorsque le passage est plus réduit, cette modification de fonctionnement se faisant pour toutes les vitesses de compression.

Pour modifier les caractéristiques d'un amortisseur classique en compression, les moyens de commande des restrictions se trouvent dans le piston dans le cas d'un amortisseur monotube ce qui entraîne des difficultés pour la localisation de ces moyens de commande et leur pilotage depuis l'extérieur. Dans le cas d'un amortisseur bitube, c'est-à-dire dans le cas où le cylindre de l'amortisseur est monté à l'intérieur d'une enveloppe cylindrique externe qui comprend le réservoir, les moyens de commande des restrictions destinées à modifier les caractéristiques de l'amortisseur en compression peuvent être disposés soit dans le piston soit au voisinage d'un clapet situé à l'extrémité du cylindre.

Pour modifier les caractéristiques des amortisseurs classiques lors d'un mouvement de détente, on a envisagé également de prévoir des moyens de commande faisant varier le débit de restrictions prévues dans le piston lui-même ce qui entraîne les difficultés mentionnés précédemment pour la localisation-et le pilotage de ces moyens de commande.

La présente invention a pour objet de modifier les amortisseurs du type mentionné au préambule, de façon à permettre de faire varier à volonté leurs caractéristiques de fonctionnement, en particulier en tenant compte de différents paramètres liés au déplacement du véhicule.

L'amortisseur selon la présente invention comporte un cylindre contenant un fluide hydraulique, un piston actionné par une tige définissant dans le cylindre une première et une deuxième chambres, ladite deuxième chambre contenant une tige, un réservoir de fluide pouvant communiquer avec la première chambre, une valve de commande soumise d'une part à la pression du fluide dans la première chambre tendant à ouvrir la valve et à l'action d'un ressort de rappel, et de la pression sensiblement constante d'un gaz de référence, tendant à fermer la valve. Une restriction est disposée entre le réservoir et la première chambre de façon à autoriser uniquement le passage du fluide hydraulique de la première chambre vers le réservoir en définissant une pression de commande qui entraîne l'ouverture de la valve lorsque la vitesse de compression de la tige dépasse une valeur limite déterminée. Selon l'invention, l'amortisseur comprend des moyens commandés pour faire varier le débit capable de traverser la restriction précitée de manière à entraîner l'ouverture de la valve de commande à des vitesses de compression différentes de la valeur limite déterminée précitée.

La valve de commande peut être soumise à la pression du fluide dans la deuxième chambre, tendant à la fermer.

La valve de commande peut, dans une variante, être soumise à la pression du fluide dans un espace intermédiaire communiquant, lors d'un mouvement de compression, d'une part à travers un clapet très souple avec la deuxième chambre et à travers la valve de commande avec la première chambre et d'autre part, à travers une restriction, avec le réservoir, ladite pression tendant à ouvrir la valve de commande.

Les moyens commandés peuvent comprendre un moteur électrique de commande, avantageusement monté sur la caisse du véhicule, à l'extérieur de l'amortisseur.

La pression du gaz de référence agissant sur la valve de commande peut être la pression atmosphérique. Elle peut également être une pression plus élevée, la chambre de référence étant alors de préférence en communication avec le réservoir par un conduit, par exemple disposé à l'extérieur de l'amortisseur.

Dans une version monotube de l'amortisseur de l'invention, le réservoir est de préférence disposé à la partie supérieure du cylindre fixé à la caisse du véhicule à l'opposé de la tige du piston. La valve de commande est ce préférence montée dans le piston lui-même.

Dans un mode de réalisation préféré de l'invention, le cylindre est fixé à la caisse du véhicule par un bloc élastique capable de faire varier le volume interne du cylindre, provoquant ainsi une ouverture de la valve de commande avant même le déplacement du piston lors d'un mouvement de compression brusque.

Dans un autre mode de réalisation de structure dite bitube, le cylindre comprend la valve de commande et est disposé à l'intérieur d'une enveloppe cylindrique en communication avec le réservoir de fluide par une restriction. Dans ce mode de réalisation, l'enveloppe cylindrique est avantageusement fixée à la caisse du véhicule par l'intermédiaire d'un bloc élastique capable de faire varier le volume interne de l'enveloppe cylindrique, ce qui provoque comme précédemment l'ouverture de la valve de commande lors d'un mouvement de compression brusque avant même tout mouvement du piston.

Grâce aux moyens de commande qui équipent la restriction permettant le passage du fluide hydraulique de la première chambre vers le réservoir lors d'un mouvement de compression, il devient possible dans un tel amortisseur de modifier les caractéristiques de fonctionnement en compression. On notera que contrairement à ce qui se passe dans un amortisseur de type classique, une diminution du débit de passage par cette restriction entraîne une diminution de la force d'amortissement pour les valeurs plus faibles de la vitesse de compression de la tige du piston étant donné que la diminution du débit de passage vers le réservoir lors de la compression entraîne une ouverture plus rapide de la valve de commande.

Lors d'un mouvement de détente, la valve de commande ne joue aucun rôle. La force d'amortissement en détente est définie de manière classique par les restrictions montées dans le piston. Le fluide hydraulique en provenance du réservoir traverse un simple clapet de réalimentation qui autorise le passage du fluide uniquement depuis le réservoir vers le cylindre de l'amortisseur, le clapet de réalimentation ne provoquant pratiquement aucune perte de charge notable.

Dans les amortisseurs de ce type où un bloc élastique a été monté entre un élément lié à la caisse du véhicule et un élément lié au cylindre de l'amortisseur afin d'obtenir une ouverture immédiate de la valve de commande lors d'un mouvement de compression brusque, on peut envisager de modifier les caractéristiques de fonctionnement de l'amortisseur pendant un mouvement de détente. Dans ces amortisseurs, il existe en effet entre la roue et la caisse du véhicule une liaison comprenant non seulement l'amortisseur mais également un élément de ressort représenté par le bloc élastique. Lors d'un mouvement de détente, ce bloc élastique s'étire sous l'action du mouvement de détente ce qui entraîne une augmentation du volume utile de la première chambre de l'amortisseur. A la fin du mouvement de détente, lorsque la tige amorce un nouveau mouvement de compression rapide, le retour du bloc élastique dans son état non étiré provoque une augmentation brutale de pression qui entraîne l'ouverture de la valve de commande pendant une très courte durée au début du mouvement de compression. On constate ainsi dans la pratique un léger retard d'établissement de la force d'amortissement du début du mouvement de compression. Cet effet, qui n'est nullement sensible lorsque le véhicule se déplace à une vitesse relativement faible ou sur un terrain ne comportant que peu d'aspérités, apparaît de manière plus sensible lors d'une vitesse élevée du véhicule ou sur une route comportant des déformations brutales de faible amplitude.

La présente invention a donc également pour objet de modifier la rigidité de la liaison élastique existant entre la partie de l'amortisseur liée aux roues du véhicule et la caisse du véhicule.

Dans ce but, on prévoit dans un amortisseur du type précédememnt mentionné dans lequel la chambre de référence est en communication avec le réservoir soumis à une pression supérieure à la pression atmosphérique, dans lequel un bloc élastique est monté entre la caisse du véhicule et l'amortisseur, que la première chambre soit alimentée en fluide hydraulique provenant du réservoir, lors d'un mouvement de détente rapide de la tige du piston, par une restriction obturée par un clapet anti-retour dont la rigidité est telle qu'elle entraîne une diminution de pression dans la première chambre capable de créer une action hydraulique sur le bloc élastique s'opposant à la déformation dudit bloc élastique due au mouvement de détente rapide. Par un choix approprié de la rigidité de ce clapet anti-retour, il est possible de faire en sorte que la liaison entre l'amortisseur et la caisse du véhicule soit sensiblement rigide comme si l'amortisseur était monté sur des rotules sans élasticité et ce, malgré l'existence du bloc élastique dont on conserve la fonction de diminution de la force d'amortissement lors d'un mouvement brusque de compression.

Dans une variante, il est également possible de prévoir des moyens commandés associés à cette restriction afin de faire varier le débit traversant ladite restriction. Il est alors possible d'agir à volonté sur la rigidité de l'ensemble. On peut avantageusement utiliser un moteur électrique de commande monté sur la caisse du véhicule à l'extérieur de l'amortisseur.

Lorsqu'on utilise deux moyens de commande dont l'un est destiné à agir pendant le fonctionnement en compression et l'autre pendant le fonctionnement en détente, on peut envisager d'utiliser deux moteurs de commande indépendants pilotés indépendamment en fonction de paramètres liés au déplacement du véhicule équipé de la suspension. On peut également utiliser un seul moteur de commande muni d'une transmission appropriée par agir sur les deux moyens de commande.

L'invention sera mieux comprise à l'étude de la description détaillée de quelques modes de réalisation pris à titre d'exemples nullement limitatifs et illustrés par les dessins annexés sur lesquels :

la figure 1 est une vue schématique en coupe d'un premier mode de réalisation de l'amortisseur selon l'invention comportant des moyens de variation des caractéristiques de fonctionnement en compression ;

la figure 2 montre différentes courbes des variations de la force d'amortissement en fonction de la vitesse de compression ;

la figure 3 est une vue éclatée en perspective de deux organes permettant de faire varier le débit à travers la restriction prévue dans l'amortisseur selon la figure 1 lors d'un mouvement de compression ;

la figure 4 est une vue analogue à la figure 1 d'une variante d'un amortisseur selon l'invention comportant un clapet présentant une rigidité augmentée par rapport à la variante de la figure 1 afin d'exercer une action sur le bloc élastique lors d'un mouvement de détente ;

la figure 5 est une vue analogue à la figure 1 d'une autre variante d'amortisseur selon l'invention comportant deux dispositifs commandés pour agir sur les caractéristiques de l'amortisseur à la fois lors d'un mouvement de compression et lors d'un mouvement de détente ;

la figure 6 est une vue analogue à la figure 1 d'une autre variante d'un amortisseur selon l'invention dans une structure bitube.

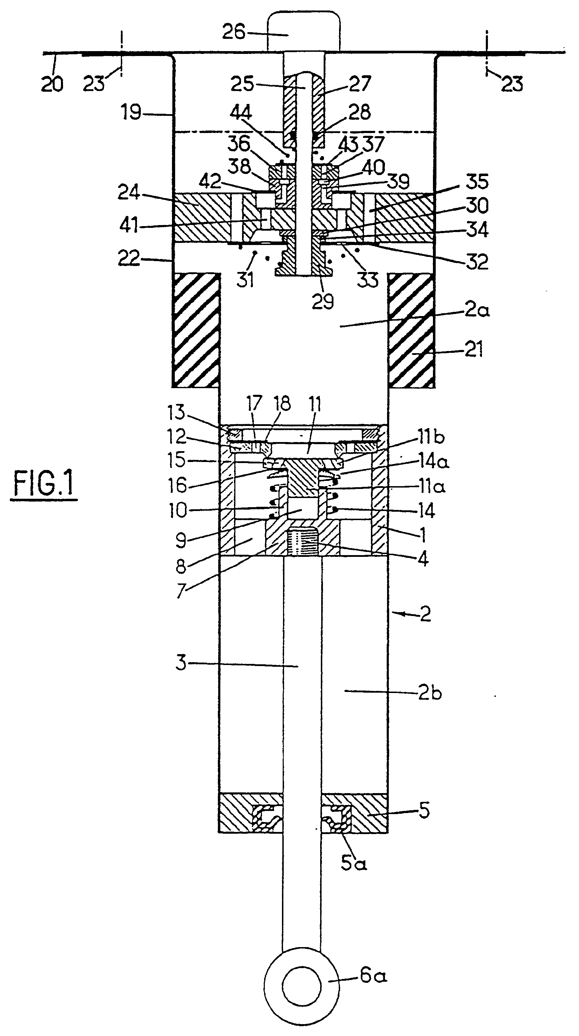

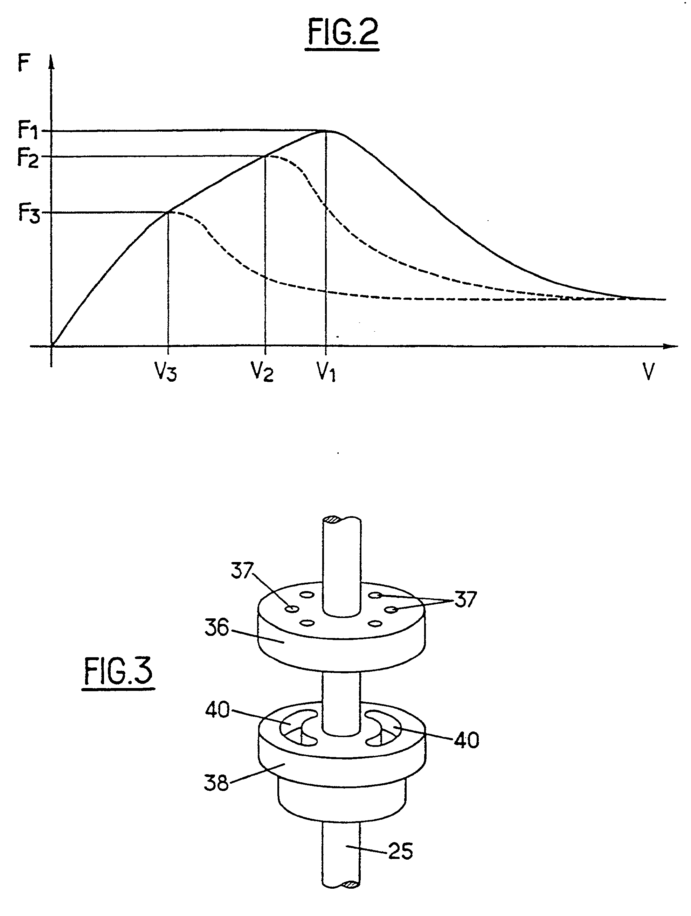

Tel qu'il est représenté sur les figures 1 et 3 l'amortisseur de l'invention, du type monotube, comprend un piston 1 qui coulisse à l'intérieur d'un cylindre 2 et qui délimite dans celui-ci une première chambre 2a côté fond du piston 1 et une deuxième chambre 2b qui renferme la tige 3 rendue solidaire du piston 1 par exemple au moyen d'une extrémité filetée 4. Le cylindre 2 est solidaire à son extrémité inférieure d'une pièce de fermeture 5 comportant un alésage central muni d'une bague d'étanchéité 5a à travers laquelle passe la tige 3 du piston. A son extrémité inférieure, la tige du piston présente un anneau d'accrochage 6a qui peut être relié à la roue du véhicule automobile.

Le piston est réalisé sous la forme d'une pièce creuse présentant une âme centrale 7 munie d'un taraudage recevant l'extrémité filetée 4 de la tige du piston 3 est solidaire des parois latérales du piston 1 par des nervures 8 laissant un passage libre pour le fluide hydraulique. L'âme centrale 7 présente par ailleurs un logement jouant le rôle de chambre de référence 9 délimitée latéralement par une paroi annulaire 10 solidaire de l'âme centrale 7. La chambre de référence 9 est remplie d'un fluide de référence, par exemple un gaz, dont la pression est sensiblement constante compte tenu du faible volume variable de la chambre 9. La chambre 9 est limitée à sa partie supérieure de façon mobile par la surface inférieure d'une valve de commande 11 qui se présente sous la forme d'une piston auxiliaire 11a pouvant coulisser de manière étanche à l'intérieur de la chambre 9. A cet effet la valve de commande 11 présente en effet une partie inférieure 11a qui coulisse à l'intérieur de la chambre 9 et un plateau supérieur 11b de plus grande diamètre, venant par sa face supérieure en contact d'étanchéité avec un siège solidaire d'une rondelle 12 fixée aux parois latérales du piston 1 par une bague de serrage 13.

La valve de commande 11 est sollicitée en direction de sa fermeture contre le siège de la rondelle 12 par l'action d'un ressort 14 qui prend appui d'une part sur un rebord de l'âme centrale 7 du piston 1 et d'autre part sur une coupelle annulaire 14a entourant la partie inférieure 11a de la valve de commande 11. Le plateau 11b de la valve de commande 11 présente des perforations 15 coopérant avec un clapet anti-retour 16 maintenu contre la surface inférieure du plateau 11b par la coupelle 15 et le ressort 14 de façon à autoriser le passage limité du fluide hydraulique entre la première chambre 2a et la deuxième chambre 2b. La rondelle 12 comporte également des perçages 17 coopérant avec un clapet anti-retour 18 maintenu par serrage entre la rondelle 12 et la bague de serrage 13 de façon à autoriser un passage limité de fluide hydraulique depuis la deuxième chambre 2b vers la première chambre 2a.

La partie supérieur de l'amortisseur est occupée par un réservoir de fluide hydraulique 19 fixé directement à la caisse 20 du véhicule. Le cylindre 2 est entouré à sa partie supérieure par un bloc élastique en élastomère 21 qui est solidaire de la paroi externe du cylindre 2 et de la paroi interne d'un manchon cylindrique 22 qui se poursuit vers le haut pour former le réservoir 19 et présente dans sa partie supérieure une bride de fixation sur la caisse 20 du véhicule automobile par l'intermédiaire de vis 23. Un élément de séparation 24 est fixé à l'intérieur du manchon 22 de façon à séparer le fluide hydraulique se trouvant dans le réservoir 19 du fluide hydraulique se trouvant dans la première chambre 2a.

La pièce de séparation 24 comporte un alésage central recevant un arbre rotatif 25 qui s'étend verticalement vers le haut à travers le réservoir 19 jusqu'au moteur d'entraînement 26 monté directement sur la caisse 20 du véhicule à l'extérieur de l'amortisseur. Le passage de l'arbre 25 dans le réservoir 19 se fait par l'intermédiaire d'un manchon d'étanchéité et de guidage 27 muni d'un joint d'étanchéité approprié 28. L'arbre 25 après avoir traversé la pièce de séparation 24 est monté avec serrage par l'intermédiaire d'une bague filetée 29 contre une rondelle anti-friction 30 qui facilite la rotation de l'arbre 25 par rapport à la pièce de séparation fixe 24. La bague 29 comporte en outre un épaulement qui permet l'appui d'un ressort hélicoïdal 31 agissant de façon à fermer un clapet 32 présentant des perçages 33. Le clapet 32 est maintenu entre la bague 29 et une rondelle 34. Le clapet 32 vient obturer dans sa zone périphérique une pluralité de passages axiaux 35 pratiqués dans la pièce de séparation 24. La rigidité du clapet 32 est choisi de façon que ledit clapet n'exerce pratiquement aucun effet de freinage sur le fluide s'échappant par les passages 35 depuis le réservoir 19 jusqu'à la première chambre 2a lors d'un mouvement de détente du piston 1. Le rôle du clapet 32 est donc essentiellement d'empêcher tout écoulement de fluide hydraulique dans le sens inverse, c'est-à-dire depuis la première chambre 2a jusqu'au réservoir 19 lors d'un mouvement de compression du piston 1.

Une bague 36 munie de deux groupes de perforations est montée de façon à être solidaire de l'arbre rotatif 25 et à se trouver en contact par sa face frontale inférieure avec la face frontale supérieure d'une pièce de passage 38 montée fixe par rapport à la pièce de séparation 24. On pourra se reporter à la figure 3 pour mieux comprendre la structure des pièces 36 et 38. La pièce de passage 38 comporte deux passages 39 communiquant sur sa face frontale supérieure avec deux gorges curvilignes oblongues 40 qui peuvent être mises en communication avec les perçages 37 de la bague 36 en fonction de la rotation de cette dernière avec l'arbre 25.

Les passages 39 communiquent avec des passages 41 traversant la pièce de séparation 24. Un clapet anti-retour 42 est en outre monté entre la pièce de passage 38 et la pièce de séparation 24 de façon à laisser le passage du fluide depuis la première chambre 2a jusqu'au réservoir 19 et empêcher tout passage de fluide dans le sens inverse.

Un clapet anti-retour supplémentaire 43 est monté au-dessus de la bague 36 et coopère avec un ressort 44 de façon à éviter, comme le clapet 42, tout passage de fluide hydraulique depuis le réservoir 19 jusqu'à la première chambre 2a.

L'action du moteur 26 provoquant la rotation de l'arbre 25 entraîne la rotation de la bague 36 de sorte qu'un nombre plus ou moins important de perforations 37 permettent le passage du fluide provenant des perçages 39. Les passages non obturés laminent l'huile passant depuis la partie inférieure de la pièce de séparation 24 c'est-à-dire depuis la première chambre 2a de l'amortisseur. Le clapet anti-retour 42 est choisi relativement rigide afin de ne permettre le passage de l'huile que de bas en haut et uniquement pour les forts débits d'huile. Dans ces conditions, l'action du clapet anti-retour 42 est limitée aux fortes vitesses de compression et la perte de charge à travers ce clapet est supérieure à la pression d'ouverture de la valve de commande 11.

On va maintenant décrire brièvement le fonctionnement de l'amortisseur lors d'un mouvement de compression de la tige 3 c'est-à-dire un mouvement de bas en haut sur la figure 1. Lors d'un mouvement de compression à vitesse relativement lente, le fluide hydraulique peut passer de la première chambre 2a dont le volume diminue, à la deuxième chambre 2b par les passages 15 de la valve de commande 11 qui reste fermée. L'augmentation de la pression dans la chambre 2a entraîne la création d'une force d'amortissement qui croît rapidement avec la vitesse de compression de la tige. La valve de commande 11 est soumise à l'action de quatre forces différentes :

— la force du ressort 14 qui tend à fermer la valve 11 ;

— la pression $p_1$ régnant dans la première chambre 2a qui agit sur la surface S du plateau 11b de la valve de commande 11 dans un sens qui tend à ouvrir ladite valve de commande ;

— la pression $p_4$ sensiblement constante du fluide ou du gaz de référence agissant sur la surface s du piston auxiliaire 11a et tendant à fermer la valve de commande 11 ;

— et enfin la pression $p_2$ qui agit sur la surface restante inférieure du plateau 11b soit (S − s) et qui tend à fermer la valve de commande 11.

La pression $p_1$ régnant dans la première chambre 2a croît en fonction de la vitesse de compression V. Il en est de même de la différence entre les pressions $p_1$ et $p_2$ qui croît également en fonction de la vitesse de compression. On notera que la pression $p_1$ doit toujours rester supérieure à la différence $p_1 − p_2$ pour éviter que la pression $p_2$ régnant dans la deuxième chambre 2b ne soit inférieure à la pression atmosphérique ce qui entraînerait des phénomènes de cavitation nuisibles au fonctionnement de l'amortisseur. On obtient ce résultat par un choix convenable de la rigidité du clapet 42 qui permet d'augmenter la pression $p_1$.

Lorsque la pression dans la chambre 2a atteint une certaine valeur limite qui correspond à une limite déterminée de la vitesse de compression, la valve de commande 11 est pilotée à l'ouverture laissant le passage au fluide hydraulique directement depuis la première chambre 2a vers la deuxième chambre 2b entre la surface supérieure du plateau 11b et le siège de la rondelle 12. La différence de pression entre les chambres 2a et 2b décroît dès que la valve de commande 11 est ouverte c'est-à-dire au-delà de la vitesse de compression limite précitée. Il en résulte une force d'amortissement qui décroît lorsque la vitesse de compression dépasse ladite limite. La courbe de variation de la force d'amortissement F en fonction de la vitesse de compression de la tige V est illustrée en trait plein sur la figure 2. La valeur maximale $F_1$ de la force d'amortissement, apparaît pour la vitesse limite $V_1$ et dépend de la pression de référence dans la chambre 9 et de la précontrainte du ressort 14 dépend également du débit de fluide hydraulique traversant la pièce de séparation 24 à travers la pièce de passage 38 et la bague 36.

Une rotation de la bague 36 qui modifie le nombre de passages 37 permettant le passage de fluide permet donc de faire varier les caractéristiques de l'amortisseur en modifiant le moment d'ouverture de la valve de commande 11. Les courbes modifiées sont représentées en pointillés sur la figure 2. Lorsque l'on agit sur le moteur 26 pour commander une diminution du débit de passage par la bague 36 on provoque de ce fait une augmentation de la pression de pilotage de la valve de commande 11 qui s'ouvre pour une valeur limite maximale $V_2$ de la vitesse de compression inférieure à celle ($V_1$) dans laquelle la valve de commande s'ouvrait pour un débit plus important. C'est ainsi que la valeur limite $V_1$ qui correspond à une force d'amortissement maximale $F_1$ est obtenue pour le passage maximal de fluide lorsque toutes les perforations 37 sont en regard des gorges 40 et permettent le passage du fluide vers le réservoir 19. Si quelques perforations 37 ne sont plus actives on obtient une nouvelle valeur limite $V_2$ inférieure à $V_1$ et il en résulte une force d'amortissement maximale $F_2$ inférieure à la force maximale $F_1$. En diminuant encore le débit de passage on peut obtenir une vitesse de compression maximale $V_3$ correspondant à l'ouverture de la valve de commande 11 inférieure à $V_2$ la force d'amortissement correspondante $F_3$ étant inférieure à la force d'amortissement $F_2$.

Dans le mode de réalisation illustré sur la figure 1, le cylindre 2 est en outre délimité à sa partie supérieure par un bloc élastique 21 comme il a été dit précédemment. On notera que l'existence d'un tel bloc élastique 21 n'est nullement indispensable et que l'amortisseur de l'invention pourrait parfaitement fonctionner en l'absence d'un tel bloc élastique.

Le bloc élastique 21 joue cependant un rôle lors d'une compression brusque ou très brutale sur l'amortisseur. Dans ce cas en effet, le bloc élastique 21 se comprime avant même tout mouvement de la tige 3. Il en résulte une diminution du volume utile de la première chambre 2a qui provoque une augmentation de la pression dans ladite chambre et l'ouverture prématurée de la valve de commande 11. L'existence du bloc élastique 21 empêche donc l'établissement rapide de la force d'amortissement ce qui permet d'obtenir sur les courbes illustrées sur la figure 2 un maximum légèrement arrondi qui améliore le confort de la suspension.

Lors d'un mouvement de détente, la force d'amortissement est créée uniquement par le clapet 18 qui autorise un passage limité par les canaux 17 à travers le piston 1. Le clapet 32, choisi très souple, joue un simple rôle de clapet de réalimentation et ne s'oppose pratiquement pas à la sortie du fluide hydraulique depuis le réservoir 19.

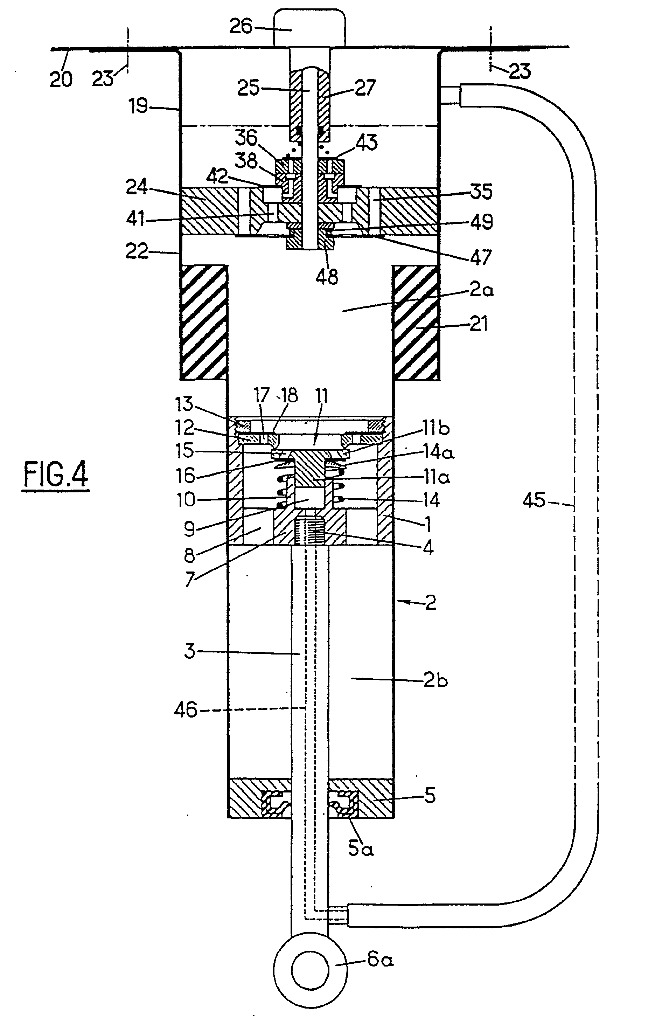

Le mode de réalisation illustré sur la figure 4 où les pièces identiques portent les mêmes références ne se différencie du mode de réalisation de la figure 1 que par les organes destinés au fonctionnement lors d'un mouvement de détente de la tige 3. Dans ce mode de réalisation, où l'on retrouve le bloc élastique élastomère 21 qui délimite la partie supérieure de la chambre 2a, le réservoir 19 est sous pression supérieure à la pression atmosphérique de façon à éviter toute cavitation de fluide hydraulique dans la première chambre 2a lors d'un mouvement de détente de la tige 3. Le réservoir 19 est mis en communication par la canalisation souple 45 avec une conduite axiale 46 se trouvant dans la tige 3 et en communication avec la chambre 9. La chambre de référence 9 se trouve donc à la même pression, supérieure à la pression atmosphérique, que le réservoir 19.

On retrouve dans le mode de réalisation de la figure 4 les mêmes moyens commandés par le moteur 26 pour modifier le débit d'huile traversant la pièce de séparation 24 lors d'un mouvement de compression de la tige 3. Dans ce mode de réalisation cependant, le clapet anti-retour 47 est monté directement entre la bague 48 et une entretoise 49. La rigidité du clapet 47 dont la zone périphérique obture les passages 35, est choisie de façon à entraîner une diminution de pression dans la première chambre 2a lors d'un mouvement de détente rapide de la tige 3. Le clapet 47 ne joue donc pas, comme c'était le cas pour le clapet 32 du mode de réalisation de la figure 1, un simple rôle de réalimentation du fluide hydraulique en provenance du réservoir 19. Il exerce une action de restriction du passage du fluide hydraulique depuis le réservoir 10 jusqu'à la chambre 2a entraînant ainsi une différence de pression entre le réservoir 19 et la chambre 2a lors d'un mouvement de détente rapide. On notera que toute cavitation est évitée malgré cette perte de charge en raison du fait que le réservoir 19 est sous pression supérieure à la pression atmosphérique.

Cette différence de pression entre le réservoir 19 et la première chambre 2a entraîne l'apparition d'une force hydraulique agissant directement sur le bloc élastique 21. Cette force agit sur le bloc élastique 21 en sens opposé de la force qui tend à déformer le bloc élastique par traction vers le bas lors d'un mouvement de détente de la tige 3.

Dans le mode de réalisation de la figure 1 où la rigidité du clapet 32 est négligeable, un mouvement de détente rapide provoque une déformation du bloc élastique 21, le cylindre 2 étant tiré vers le bas par le mouvement de détente de la tige 3. Tout se passe comme si, entre la caisse du véhicule et la roue, se trouvait un amortisseur monté sur des rotules élastiques. Une telle élasticité rend la suspension douce à basse vitesse. Il en résulte cependant une tendance à mal amortir le rebond des roues sur un sol présentant de petites inégalités lorsque le véhicule roule à grande vitesse. En effet lors d'un mouvement de compression faisant suite à un mouvement de détente, le retour du bloc élastique 21 à son état non étiré provoque une diminution du volume utile de la première chambre 2a qui entraîne le pilotage à l'ouverture de la valve de commande 11.

Dans le mode de réalisation de la figure 4 et grâce au choix d'un clapet rigide 47 on peut faire en sorte que le bloc élastique 21 ne se déforme pratiquement pas lors d'un mouvement de détente en équilibrant par la force hydraulique due à la différence de pression entre le réservoir 19 et la chambre 2a, la force antagoniste du mouvement de détente. Tout se passe alors comme si l'amortisseur était monté sur des rotules sans élasticité entre la caisse du véhicule et la roue. La courbe d'amortissement en détente n'a pas été modifiée mais simplement les caractéristiques de la liaison de l'amortisseur à la caisse du véhicule.

On notera que lorsque l'amortisseur est mis sous pression sans qu'il y ait de mouvement de la tige 3, le bloc élastique 21 se déforme sous l'effet de la pression statique, la force hydraulique équilibrant la tension du bloc élastique. Ce qui vient d'être décrit concerne essentiellement les variations de pression par rapport à cette pression statique, variations dues à la perte de charge provoquée par le clapet 47 entraînant une restriction entre le réservoir 19 et la première chambre 2a.

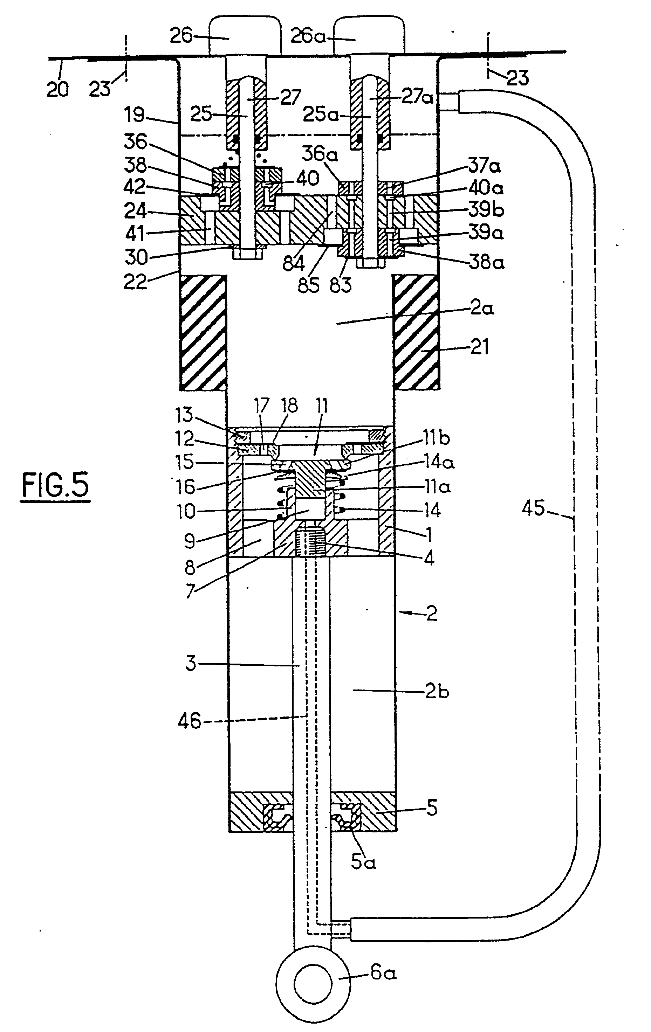

Le mode de réalisation de la figure 5 illustre à titre d'exemple une application de l'invention sur un amortisseur dont la structure générale est identique à celle des amortisseurs illustrés sur les figures 1 et 4 mais qui comporte des moyens commandés indépendamment pour faire varier les caractéristiques de fonctionnement de l'amortisseur non seulement lors d'un mouvement de compression mais également lors d'un mouvement de détente. Sur cette figure, les pièces identiques portent les mêmes références. La pièce de séparation 24 est équipée de deux ensembles fonctionnant alternativement lors d'un mouvement de compression ou lors d'un mouvement de détente. Pour un mouvement de compression, on retrouve sur la gauche de la figure 5 des moyens commandés analogues à ceux déjà illustrés sur les figures 1 et 4. On retrouve en particulier le moteur 26 entraînant en rotation l'arbre 25 solidaire en rotation de la bague 36 de façon à coopérer avec la pièce de passage 38 pour ouvrir plus ou moins le passage de fluide depuis la première chambre 2a jusqu'au réservoir 19, le fluide traversant la pièce 24 par les passages 41. On retrouve également le clapet anti-retour 42. Dans ce mode de réalisation l'arbre 25 est simplement serré contre la pièce de séparation 24 par un écrou en contact de friction avec la bague 30.

Pour faire varier les caractéristiques de fonctionnement de l'amortisseur lors d'un mouvement de détente, on a prévu dans ce mode de réalisation, sur la droite de la figure 5, des moyens commandés du même type pour lesquels les références seront affectées de la lettre a. Ces moyens comprennent donc un moteur 26a monté également à l'extérieur de l'amortisseur à côté du moteur 26 et entraînant en rotation un arbre 25a qui porte une bague 36a solidaire en rotation de l'arbre 25a. L'arbre 25a est guidé par le manchon 27a. La pièce de passage 38a est montée de manière fixe de l'autre côté de la pièce de séparation 24 en étant traversée par l'arbre rotatif 25a maintenu par un écrou d'extrémité. On retrouve dans la pièce de passage 38a les passages 39a tandis que les gorges incurvées 40a qui jouent le même rôle que les gorges 40 de la pièce de passage 38 sont pratiquées directement sur la surface frontale supérieure de la pièce de séparation 24 de façon à coopérer avec les différents passages 37a de la bague 36a lesquels sont disposés par groupes comme c'était le cas pour les passages 37 de la bague 36. Le fluide hydraulique peut donc traverser un certain nombre des passages 37a puis par les gorges 40a et des passages 39b se trouvant dans la pièce de séparation 24, pénétrer dans les passages 39a de la pièce de passage 38a. Un clapet anti-retour très souple 83 empêche le passage du fluide à travers la pièce de séparation 24 dans l'autre sens c'est-à-dire depuis la première chambre 2a jusqu'au réservoir 19.

Une action sur le moteur 26a tendant à diminuer le débit à travers les passages 37a entraînera, comme cela a été expliqué pour la variante de la figure 4, une action hydraulique sur le bloc élastique 21, augmentant la raideur de la liaison entre l'amortisseur et la caisse de véhicule, lors d'un mouvement de détente.

Pour les très fortes vitesses de détente, la pièce de séparation 24 comporte en outre des passages 84 obturés par un clapet anti-retour relativement rigide 85 maintenu entre la pièce de séparation 24 et un épaulement de la pièce de passage 38a.

Les moteurs de commande 26 et 26a sont normalement associés à des potentiomètres ou à des codeurs angulaires permettant de mesurer la position des arbres 25 et 25a de façon à s'assurer que le débit de fluide commandé à travers les différentes restrictions est bien le débit désiré. On peut également utiliser pour les moteurs 26 et 26a des moteurs pas à pas qui sont alors systématiquement mis en butée à la mise en route du véhicule. La position exacte des arbres 25 et 25a est alors obtenue par comptage et décomptage des impulsions faisant tourner les moteurs dans un sens ou dans l'autre.

On notera que la structure des moyens commandés telle qu'elle a été décrite jusqu'à présent c'est-à-dire comportant les arbres rotatifs 25 et 25a portant les bagues rotatives 36 et 36a peut être remplacée par d'autres moyens de type classique. On peut en particulier envisager de faire varier le débit à travers une restriction au moyen d'un noyau plongeur se déplaçant verticalement, par exemple sous l'action d'un arbre rotatif coopérant avec l'extrémité filetée du noyau plongeur de façon à transformer la rotation de l'arbre en translation du noyau plongeur. On peut également commander de tels noyaux plongeur à l'aide d'électro-aimants fournissant seulement deux positions de réglage.

On notera que la variation des caractéristiques de l'amortisseur de l'invention peut être faite aisément par des moyens situés dans une partie de l'amortisseur liée à la caisse du véhicule ce qui permet de disposer l'organe électrique de commande tel que les moteurs 26 et 26a à l'extérieur de l'enceinte remplie d'huile de l'amortisseur. Les liaisons entre les pièces modifiant le débit à travers les restrictions et les organes de commande tels que les moteurs 26 et 26a sont assurées par des axes rigides.

La commande des moteurs 26 et 26a peut être faite de manière indépendante. On peut également envisager dans certains cas de simplifier la commande en agissant de la même manière sur les deux moteurs 26 et 26a, ou même en les remplaçant par un moteur unique lié aux moyens de commande par deux transmissions appropriées.

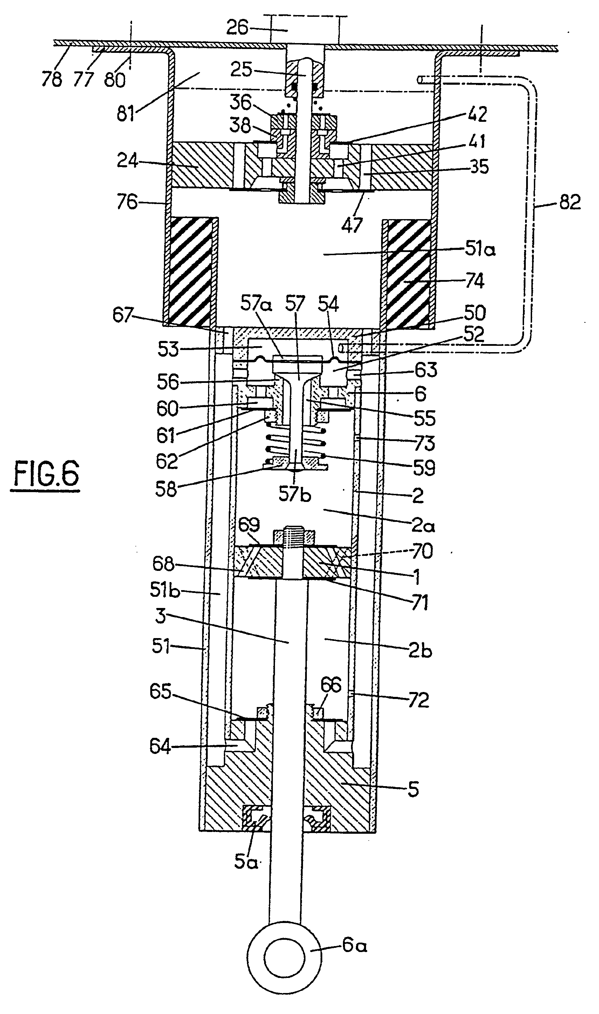

Le mode de réalisation de la figure 6 illustre à titre d'exemple une application de l'invention sur un amortisseur du type bitube. Sur la figure 6 où les pièces identiques portent les mêmes références que sur les figures précédentes, le cylindre 2 comporte dans sa partie supérieure une pièce de commande 6 sur laquelle se trouve fixée, par des moyens non représentés, une pièce de fermeture supérieure 50. Une enveloppe cylindrique extérieure 51, concentrique au cylindre 2, sert de logement à l'ensemble des éléments de l'amortisseur et est solidaire de la pièce de fermeture inférieure 5 et de la pièce de fermeture supérieure 50.

La pièce de commande 6 délimite avec la pièce de fermeture supérieure 50 un espace intermédiaire 52 et une chambre de référence 53 séparés par une membrane souple 54 hermétique aux gaz et maintenue serrée entre deux surfaces frontales respectives de la pièce de commande 6 et de la pièce de fermeture supérieure 50. La chambre de référence 53 est remplie d'un gaz à une pression de référence sensiblement constante.

La pièce de commande 6 comporte un alésage central 55 présentant sur sa partie supérieure un siège de soupape 56 sur lequel vient porter une portion sensiblement conique de la valve de commande 57 qui présente une portion supérieure 57a solidaire de la membrane 54. La valve 57 présente par ailleurs à l'opposé de la portion 57a une tige 57b qui traverse l'alésage 55 et comporte à son extrémité une rondelle 58 sur laquelle vient s'appuyer un ressort de rappel 59 de la valve de commande 57 qui prend appui par ailleurs sur la pièce de commande 6.

La pièce de commande 6 comporte de plus des passages 60 susceptibles de mettre en communication l'espace intermédiaire 52 avec la première chambre 2a du cylindre. Un clapet anti-retour 61 très souple maintenu au moyen d'un écrou 62 empêche la circulation du fluide hydraulique de la première chambre 2a vers l'espace intermédiaire 52. La pièce de commande 6 comporte en outre des passages radiaux 63 permettant une circulation dans les deux sens du fluide hydraulique entre l'espace intermédiaire 52 et l'espace annulaire 51b délimité par le cylindre 2 et l'enveloppe externe concentrique 51. Des passages 64 et un clapet anti-retour 65 très souple maintenu par un écrou 66 sont prévus dans la pièce inférieure 5 pour permettre la circulation du fluide hydraulique depuis l'espace annulaire 51b vers la deuxième chambre 2b et l'interdire dans l'autre sens.

La pièce de fermeture supérieure 50 comporte des passages 67 mettant en communication l'espace annulaire 51b et la portion 51a de l'enveloppe externe 51 située au-dessus de la pièce de fermeture 50. Le piston 1 comprend des passage 68 coopérant avec un clapet anti-retour rigide 69 de façon à permettre un passage limité de fluide hydraulique depuis la deuxième chambre 2b jusqu'à la première chambre 2a et interdire toute circulation an sens inverse. Le piston 1 comporte également des passages 70 coopérant avec un clapet anti-retour rigide 71 pour permettre une circulation limitée de fluide hydraulique depuis la première chambre 2a jusqu'à la deuxième chambre 2b et interdire toute circulation en sens inverse. Des orifices calibrés tels que 72 et 73 sont prévus dans la paroi du cylindre 2 au voisinage respectivement de sa partie basse et de sa partie haute.

L'enveloppe externe cylindrique 51 est fermée à sa partie supérieure par un bloc élastique en élastomère 74 qui est solidaire de la paroi externe de l'enveloppe 51 et qui est fixé par sa surface périphérique externe à l'intérieur d'un manchon cylindrique 76 qui se prolonge vers le haut et présente dans sa partie supérieure une bride de fixation 77 par l'intermédiaire de laquelle le manchon 76 peut être fixé à la caisse du véhicule automobile 78 au moyen de vis 80.

Le manchon 76 constitue le réservoir de l'amortisseur et renferme un gaz dans sa partie haute 81. Un tuyau souple 82 met en communication la partie 81 du réservoir avec la chambre de référence 53 de sorte que ladite chambre et le réservoir peut être mis sous une pression élevée supérieure à la pression atmosphérique.

La portion 51a de l'enveloppe cylindrique 51 est séparée du réservoir par une pièce de séparation 24 qui présente la même structure que celle qui a déjà été décrite en référence au mode de réalisation de la figure 4. C'est ainsi que l'on retrouve le moteur de commande 26 qui entraîne en rotation la bague 36 afin de faire varier le débit de fluide hydraulique depuis la portion supérieure 51a jusqu'au réservoir 81 lors d'un mouvement de compression de la tige 3 ce qui entraîne, selon la rotation de l'arbre 25 une modification des caractéristiques de fonctionnement en compression comme c'était déjà le cas dans le mode de réalisation de la figure 4.

A titre d'exemple on a représenté ici un clapet rigide 47 qui présente les mêmes caractéristiques que celui illustré sur la figure 4. Lors d'un mouvement de détente de la tige 3, on obtient donc la même action que décrit précédemment sur le bloc élastique 74.

Les différents modes de réalisation illustrés, qu'ils soient en version monotube ou en version bitube peuvent être sans difficulté adaptés à une suspension de véhicule automobile dans laquelle l'amortisseur est placé à l'intérieur et concentriquement au ressort principal de la suspension c'est-à-dire une suspension du type connu sous l'appellation de Mac-Pherson.

Les commandes de variation des caractéristiques de fonctionnement de l'amortisseur peuvent également être effectuées manuellement soit directement sur l'amortisseur soit à distance par l'intermédiaire d'une liaison mécanique.

Dans le cas où on utilise des moyens de commande électrique, la commande du ou des moteur(s) permettant de faire varier les caractéristiques de fonctionnement de l'amortisseur en compression ou en détente ou encore à la fois en compression et en détente peut être faite en fonction d'un certain nombre de grandeurs liées au fonctionnement et en déplacement du véhicule. Ces grandeurs sont principalement :

— la vitesse du véhicule. La suspension est alors en général assouplie aux faibles vitesses par fermeture de la restriction pour le fluide entrant dans le réservoir lors d'un mouvement de compression et ouverture de la restriction pour le fluide sortant du réservoir lors d'un mouvement de détente.

— L'information de mise en virage du véhicule obtenue soit par une lecture de l'angle de braquage de la direction soit éventuellement par un accéléromètre transversal soit encore par un gyromètre de lacets. Dans de telles conditions on durcit les amortisseurs en compression du côté extérieur du virage.

— L'information de freinage obtenue par lecture de la position de la pédale de frein soit par mesure de la pression de l'huile de frein soit encore à l'aide d'un accéléromètre longitudinal. En cas de freinage, les amortisseurs avant sont durcis en compression.

— L'information d'accélération estimée à partir de la position de l'accélérateur et du rapport de la boîte de vitesses du véhicule ou à l'aide d'un accéléromètre longitudinal. En cas d'accélération, les amortisseurs arrière sont durcis en compression.

— L'information de débattement de la suspension qui peut être mesurée soit sur chaque roue soit sur chaque essieu en mesurant le débattement du point milieu de la barre anti-roulis. Lorsque la suspension est en position haute, il convient de durcir la caractéristique de l'amortisseur en compression et éventuellement de durcir la liaison de l'amortisseur à la caisse du véhicule en détente. Dans le cas d'une mesure de position on peut utiliser soit la mesure directe délivrée par exemple à l'aide d'un rhéostat soit une mesure légèrement filtrée pour éliminer des informations à haute fréquence parasites.

Les amortisseurs de l'invention permettent donc de tenir compte de ces différentes grandeurs qui peuvent être traitées par un micro-processeur pour modifier les caractéristiques de fonctionnement des amortisseurs en tenant compte du fonctionnement et du déplacement du véhicule.

**Revendications**

1. Amortisseur comportant un cylindre (2) contenant un fluide hydraulique, un piston (1) actionné par une tige (3) définissant dans le cylindre une première chambre (2a) et une deuxième chambre (2b), ladite deuxième chambre contenant la tige, un réservoir de fluide (19) pouvant communiquer avec la première chambre, une valve de commande (11, 57) soumise à la pression du fluide dans la première chambre tendant à ouvrir la valve et à l'action d'un ressort de rappel (14, 59), et de la pression sensiblement constante d'un gaz de référence tendant à fermer la valve, une restriction (42) entre le réservoir et la première chambre autorisant uniquement le passage du fluide hydraulique de la première chambre vers le réservoir et définissant une pression de commande entraînant l'ouverture de la valve (11, 57) lorsque une vitesse de compression de la tige (3) dépasse une valeur limite déterminée, caractérisé par le fait qu'il comprend des moyens commandés (25, 36) pour faire varier le débit capable de traverser ladite restriction de manière à entraîner l'ouverture de la valve de commande (11, 57) pour des vitesses de compression différentes de la valeur limite déterminée.

2. Amortisseur selon la revendication 1, caractérisé par le fait que la valve de commande (11) est en outre soumise à la pression du fluide dans la deuxième chambre (2b), tendant à la fermer.

3. Amortisseur selon la revendication 1, caractérisé par le fait que la valve de commande est en outre soumise à la pression du fluide dans un espace intermédiaire (52) communiquant, lors d'un mouvement de compression, d'une part à travers un clapet très souple (65) avec la deuxième chambre (2b) et à travers la valve de commande (57) avec la première chambre (2a), et d'autre part à travers la restriction (42) avec le réservoir, ladite pression tendant à ouvrir la valve de commande.

4. Amortisseur selon l'une des revendications 1 à 3, caractérisé par le fait qu'il comprend un moteur électrique de commande (26) monté sur la caisse du véhicule à l'extérieur de l'amortisseur.

5. Amortisseur selon l'une des revendications précédentes caractérisé par le fait que la pression du gaz de référence est la pression atmosphérique.

6. Amortisseur selon l'une quelconque des revendications précédentes, caractérisé par le fait que la chambre de référence est en communication avec le réservoir.

7. Amortisseur selon l'une quelconque des revendications précédentes, caractérisé par le fait que le réservoir est disposé dans la partie supérieure du cylindre (2) fixée à la caisse du véhicule, à l'opposé de la tige (3) du piston.

8. Amortisseur selon l'une quelconque des revendications précédentes, caractérisé par le fait que le cylindre (2) est fixé à la caisse du véhicule par l'intermédiaire d'un bloc élastique (21) capable de faire varier le volume interne du cylindre (2).

9. Amortisseur selon l'une quelconque des revendications précédentes, caractérisé par le fait que la valve de commande (11) est montée dans le piston (1).

10. Amortisseur selon l'une quelconque des revendications 3 à 8, caractérisé par le fait que le cylindre (2) comprend la valve de commande (57) et est disposé à l'intérieur d'une enveloppe cylindrique (51) en communication avec le réservoir de fluide par une restriction.

11. Amortisseur selon la revendication 10, caractérisé par le fait que l'enveloppe cylindrique (51) est fixée à la caisse du véhicule par l'intermédiaire d'un bloc élastique (74) capable de faire varier le volume interne de l'enveloppe cylindrique (51).

12. Amortisseur selon l'une des revendications 8 ou 11, caractérisé par le fait que la chambre de référence est en communication avec le réservoir soumis à une pression supérieure à la pression atmosphérique et que la première chambre est alimentée en fluide hydraulique provenant du réservoir, lors d'un mouvement de détente rapide de la tige du piston, par une restriction (37a) obturée par un clapet anti-retour (83, 47) dont la rigidité est telle qu'elle entraîne une diminution de pression dans la première chambre (2a) capable de créer une action hydraulique sur le bloc élastique (21, 74), s'opposant à la déformation dudit bloc élastique due au mouvement de détente rapide.

13. Amortisseur selon la revendication 12, caractérisé par le fait que ladite restriction (37a) est associée à des moyens commandés (26a) pour faire varier le débit transversant la restriction.

14. Amortisseur selon la revendication 13, caractérisé par le fait qu'un moteur électrique de commande (26a) est monté sur la caisse du véhicule à l'extérieur de l'amortisseur.

15. Amortisseur selon la revendication 14, caractérisé par le fait que les deux moteurs (26, 26a) de commande sont pilotés en fonction de paramètres liés au déplacement du véhicule muni d'une suspension équipée de l'amortisseur.

16. Amortisseur selon la revendication 15, caractérisé par le fait que les deux moteurs (26, 26a) sont pilotés de manière indépendante.

**Patentansprüche**

1. Stoßdämpfer, der aufweist : Einen ein Hydraulikfluid enthaltenden Zylinder (2), einen voneiner Kolbenstange (3) betätigten Kolben (1), der in dem Zylinder eine erste Kammer (2a) und eine zweite Kammer (2b) begrenzt, wobei die zweite Kammer die Kolbenstange enthält, einen Fluid-Vorratsbehälter (19), der mit der ersten Kammer kommunizieren kann, ein Steuerventil (11, 57), das mit dem Druck des sich in der ersten Kammer befindenden Fluids beaufschlagt ist, der bestrebt ist, das Ventil zu öffnen und das im Ventilschließungssinne unter der Einwirkung einer Rückstellfeder (14, 59) und des im wesentlichen konstanten Druckes eines Bezugsgases steht, ein Strömungswiderstand (42) zwischen dem Vorratsbehälter und der ersten Kammer, der Hydraulikfluid lediglich von der ersten Kammer zu dem Vorratsbehälter hin durchläßt und einen Steuerdruck bestimmt, welcher das Öffnen des Ventiles (11, 57) bewirkt, wenn die Kompressionsgeschwindigkeit der Kolbenstange (3) einen vorbestimmten Grenzwert überschreitet, dadurch gekennzeichnet, daß er gesteuerte Mittel (25, 36) zur Veränderung des möglichen Durchsatzes durch den Strömungswiderstand aufweist, derart, daß das Steuerventil (11, 57) bei von dem vorgegebenen Grenzwert verschiedenen Kompressionsgeschwindigkeiten geöffnet wird.

2. Stoßdämpfer nach Anspruch 1, dadurch gekennzeichnet, daß das Steuerventil (11) außerdem im Schließungssinne mit dem Fluiddruck in der zweiten Kammer (2b) beaufschlagt ist.

3. Stoßdämpfer nach Anspruch 1, dadurch gekennzeichnet, daß das Steuerventil außerdem mit dem Fluiddruck in einem Zwischenraum (52) beaufschlagt ist, der bei einer Kompressionsbewegung einerseits über eine sehr biegsame Rückschlagklappe (65) mit der zweiten Kammer (2b) sowie über das Steuerventil (57) mit der ersten Kammer (2a) und der andererseits über den Durchströmwiderstand (42) mit dem Vorratsbehälter in Verbindung steht, wobei der vorgenannte Druck bestrebt ist, das Steuerventil zu öffnen.

4. Stoßfämpfer nach einem der Ansprüche 1 bis 3, dadurch gekennzeichnet, daß er einen elektrischen Steuermotor (26) aufweist, der außerhalb des Stoßdämpfers auf dem Fahrzeugaufbau angeordnet ist.

5. Stoßdämpfer nach einem der vorhergehenden Ansprüche, dadurch gekennzeichnet, daß der Druck des Bezugsgases gleich dem Atmosphärendruck ist.

6. Stoßdämpfer nach einem der vorhergehenden Ansprüche, dadurch gekennzeichnet, daß die Bezugskammer mit dem Vorratsbehälter in Verbindung steht.

7. Stoßdämpfer nach einem der vorhergehenden Ansprüche, dadurch gekennzeichnet, daß der Vorratsbehälter in dem oberen, an dem Fahrzeugaufbau befestigten Teil des Zylinders (2), der Kolbenstange (3) gegenüberliegend, angeordnet ist.

8. Stoßdämpfer nach einem der vorhergehenden Ansprüche, dadurch gekennzeichnet, daß der Zylinder (2) an dem Fahrzeugaufbau mittels eines elastischen Blockes (21) befestigt ist, der das Innenvolumen des Zylinders (2) verändern kann.

9. Stoßdämpfer nach einem der vorhergehenden Ansprüche, dadurch gekennzeichnet, daß das Steuerventil (11) in dem Kolben (1) angeordnet ist.

10. Stoßdämpfer nach einem der Ansprüche 3 bis 8, dadurch gekennzeichnet, daß der Zylinder (2) das Steuerventil (57) enthält und im Inneren eines zylindrischen Mantels (51) angeordnet ist, der über einen Durchströmwiderstand mit dem Fluid-Vorratsbehälter in Verbindung steht.

11. Stoßdämpfer nach Anspruch 10, dadurch gekennzeichnet, daß der zylindrische Mantel (51) an dem Fahrzeugaufbau mittels eines elastischen Blockes (74) befestigt ist, der das Innenvolumen des zylindrischen Mantels (51) verändern kann.

12. Stoßdämpfer nach Anspruch 8 oder 11, dadurch gekennzeichnet, daß die Bezugskammer mit dem mit einem höheren Druck als dem Atmosphärendruck beaufschlagten Vorratsbehälter in Verbindung steht und daß die erste Kammer bei einer schnellen Ausfederungsbewegung der Kolbenstange mit von dem Vorratsbehälter kommendem Hydraulikfluid über einen Strömungswiderstand (37a) gespeist ist, der durch eine Rückschalgklappe (83, 47) versperrt ist, deren Steifigkeit derart gewählt ist, daß sie eine Verminderung des Druckes in der ersten Kammer (2a) erzeugt, durch die eine hydraulische Einwirkung auf den elastischen Block (21, 74) herbeiführbar ist, die der von der schnellen Ausfederungsbewegung herrührenden Verformung des elastischen Blockes entgegenwirkt.

13. Stoßdämpfer nach Anspruch 12, dadurch gekennzeichnet, daß der Stömungswiderstand (37a) Steuermitteln (26a) zur Veränderung des Durchsatzes durch den Strömungswiderstand zugeordnet ist.

14. Stoßdämpfer nach Anspruch 13, dadurch gekennzeichnet, daß ein elektrischer Steuermotor (26a) außerhalb des Stoßdämpfers auf dem Fahrzeugaufbau angeordnet ist.

15. Stoßdämpfer nach Anspruch 14, dadurch gekennzeichnet, daß die beiden Steuermotoren (26, 26a) in Abhängigkeit von Parametern gesteuert sind, die mit der Fahrt des eine mit dem Stoßdämpfer ausgerüstete Federung aufweisenden Fahrzeugs verbunden sind.

16. Stoßdämpfer nach Anspruch 15, dadurch gekennzeichnet, daß die beiden Motoren (26, 26a) voneinander unabhängig gesteuert sind.

## Claims

1. Shock absorber comprising a cylinder (2) containing a hydraulic fluid, a piston (1) actuated by a rod (3) defining a first chamber (2a) and a second chamber (2b) in the cylinder, the first chamber containing the rod, a fluid tank (19) able to communicate with the first chamber, a control valve (11, 57) subject to the fluid pressure in the first chamber tending to open the valve and to the action of a recall spring (14, 59) and the substantially constant pressure of a reference gas tending to close the valve, a throttle (42) between the tank and the first chamber enabling solely the passage of the hydraulic fluid from the first chamber to the tank and defining a control pressure causing the opening of the valve (11, 57) when the speed of compression of the rod (3) exceeds a predetermined limit value, characterized in that it comprises controlled means (25, 36) for varying the flow rate able to pass through the throttle so as to cause the opening of the control valve (11, 57) for compression speeds differing from the predetermined limit value.

2. Shock absorber as claimed in claim 1, characterized in that the control valve (11) is also subject to the fluid pressure in the second chamber (2b) tending to close it.

3. Shock absorber as claimed in claim 1, characterized in that the control valve is also subject to the fluid pressure in an intermediate space (52) communicating, during a compression movement, on the one hand via a very flexible valve (65) with the second chamber (2b) and via the control valve (57) with the first chamber (2a) and, on the other hand, via the throttle (42) with the tank, this pressure tending to open the control valve.

4. Shock absorber as claimed in one of claims 1 to 3, characterized in that it comprises an electric control motor (26) mounted on the vehicle body externally to the shock absorber.

5. Shock absorber as claimed in one of the preceding claims, characterized in that the reference gas pressure is atmospheric pressure.

6. Shock absorber as claimed in any one of the preceding claims, characterized in that the reference chamber is in communication with the tank.

7. Shock absorber as claimed in any one of the preceding claims, characterized in that the tank is disposed in the upper portion of the cylinder (2) secured to the vehicle body opposite the piston rod (3).

8. Shock absorber as claimed in any one of the preceding claims, characterized in that the cylinder (2) is secured to the vehicle body via an elastic block (21) able to vary the inner volume of the cylinder (2).

9. Shock absorber as claimed in any one of the preceding claims, characterized in that the control valve (11) is mounted in the piston (1).

10. Shock absorber as claimed in any one of claims 3 to 8, characterized in that the cylinder (2) comprises the control valve (57) and is disposed within a cylindrical casing (51) communicating with the fluid tank via a throttle.

11. Shock absorber as claimed in claim 10, characterized in that the cylindrical casing (51) is secured to the vehicle body via an elastic block (74) able to vary the inner volume of the cylindrical casing (51).

12. Shock absorber as claimed in one of claims 8 or 11, characterized in that the reference chamber is in communication with the tank subject to a pressure greater than atmospheric pressure and in that the first chamber is supplied with hydraulic fluid from the tank, during a rapid release movement of the piston rod, via a throttle (37a) closed off by a non-return valve (83, 47) whose rigidity is such that it causes a pressure decrease in the first chamber (2a) able to create a hydraulic action on the elastic block (21, 74) opposing the deformation of this elastic block due to the rapid release movement.

13. Shock absorber as claimed in claim 12, characterized in that the throttle (37a) is associated with controlled means (26a) for varying the flow rate passing through the throttle.

14. Shock absorber as claimed in claim 13, characterized in that an electric control motor (26a) is mounted on the vehicle body externally to the shock absorber.

15. Shock absorber as claimed in claim 14, characterized in that the two control motors (26, 26a) are driven as a function of parameters linked to the movement of the vehicle provided with a suspension fitted with the shock absorber.

16. Shock absorber as claimed in claim 15, characterized in that the two motors (26, 26a) are driven independently.

FIG.1

## FIG.2

## FIG.3

FIG.4

EP 0 304 599 B1

FIG.5

16

FIG.6